# EUROPÄISCHE PATENTSCHRIFT

(11) **EP 3 214 050 B1**
(45) Veröffentlichungstag und Bekanntmachung des Hinweises auf die Patenterteilung: **01.08.2018**
(21) Anmeldenummer: 16169028.4
(22) Anmeldetag: 10.05.2016
(51) Int. Cl.: C03B 5/04, C03B 5/182, C03B 5/185, C03B 5/225, C03B 5/235

(54) **REFINER FÜR EINE GLASSCHMELZANLAGE**
REFINER FOR GLASS MELTING DEVICE
AFFINEUR POUR INSTALLATION DE FUSION DU VERRE

(30) Priorität: 02.03.2016 DE 102016103755
(43) Veröffentlichungstag der Anmeldung: 06.09.2017
(73) Patentinhaber: Beteiligungen Sorg GmbH & Co. KG, 97816 Lohr am Main (DE)
(72) Erfinder: Sorg, Alexander, 63739 Aschaffenburg (DE); Lindig, Matthias, 55218 Ingelheim (DE)
(74) Vertreter: Keil & Schaafhausen Patent- und Rechtsanwälte PartGmbB

(56) Entgegenhaltungen:
- EP-A1- 1 298 094
- DD-A5- 287 244
- DE-B- 1 218 666
- US-A- 2 119 948
- US-A- 2 249 714
- US-A- 3 606 825

## Beschreibung

Die vorliegende Erfindung betrifft eine Glasschmelzanlage, insbesondere für die Herstellung von Faserglas, mit einem Schmelzgefäß, wobei Rohstoffe dem Schmelzgefäß mittels einer Zuführeinrichtung zugeführt und dort aufgeschmolzen werden.

Glasschmelzanlagen können mittels Tauchbrennern (submerged combustion heater) beheizt werden. Der Vorteil einer solchen Glasschmelzanlage besteht darin, dass eine hohe Schmelzleistung auf kleinem Raum erreicht wird.

Eine derartige Glasschmelzanlage wird bereits in der Druckschrift US 3,260,587 beschrieben. Diese weist eine Schmelzkammer mit Tauchbrennern auf, in die das Rohmaterial über eine Zuführeinrichtung aufgegeben wird. Die Tauchbrenner sind vollständig innerhalb des flüssigen Glases angeordnet. Mit dem Auslass der Schmelzkammer ist ein Refinerabschnitt (Läuterabschnitt) verbunden, wobei sich im Bereich des Auslasses über die gesamte Breite der Schmelzkammer ein Wehr (Erhebung) erstreckt.

Bei derartigen Schmelzanlagen mit Tauchbrennern besteht häufig das Problem, dass die Glasschmelze einen hohen Anteil an Gasblasen enthält. Hierbei existiert die Theorie, dass die Blasigkeit durch eine Reaktion des fossilen Brennstoffs und des Oxidanten des Tauchbrenners entsteht. Die exotherme Reaktion beider gasförmiger Stoffe findet innerhalb der Glasschmelze statt, wobei als Reaktionsprodukt aus dem Brennstoff und dem Oxidanten (in der Regel Sauerstoff) Kohlendioxid und Wasserdampf entsteht. Diese Reaktionsprodukte bilden feine Blasen mit einem Durchmesser von 0,1 mm bis 1 mm, wobei die Blasen die Qualität der Glasschmelze reduzieren. Es wird von einem Gasanteil in der Glasschmelze von bis zu 30 Vol.-% berichtet.

Bei der Anwendung konventioneller Schmelztechnik wird je nach Produkt die Anforderung an die Blasigkeit mit der Messgröße Anzahl der Blasen pro Gewicht der Probe beschrieben. Geforderte Qualitäten des Glasprodukts liegen zwischen 0,1 Blase/1000 g Glas und 100 Blasen/100 g Glas. Häufig darf auch die Blasengröße nur in einem vorgegebenen Bereich liegen. Bei Glasschmelzanlagen, die mittels Tauchbrennern beheizt werden, können derartige Qualitätsanforderungen oft nicht eingehalten werden. Daher wird diese Schmelztechnik häufig auf die Herstellung von Faserglas oder Glas- und Steinwolle beschränkt. Diese Produkte werden für die Herstellung von Isoliermatten verwendet, bei der die Blasigkeit der Fasern sich nicht nachteilig auswirkt.

Um die hinsichtlich Platzanforderung und Schmelzleistung vorteilhafte Schmelztechnik auch für weitere Anwendungen einsetzen zu können bzw. die Qualität des hergestellten Glases zu erhöhen, ist es wünschenswert, die Blasigkeit der Glasschmelze zu reduzieren. Hierfür ist bei der aus der Druckschrift US 3,606,825 bekannten Glasschmelzanlage eine Refinerzone (Läuterzone) vorgesehen, um Blasen oder andere gasförmige Einschlüsse aus der Glasschmelze zu beseitigen oder freizusetzen. Auch die in der Druckschrift US 2004/0224833 A1 beschriebene Glasschmelzanlage mit Tauchbrennern weist einen Läuterbereich auf, welcher sich an die Glasschmelzwanne anschließt. Die mit den Tauchbrennern beheizte Glasschmelze wird jedoch lediglich in einem Nebenstrang erzeugt und der Hauptstrang-Glasschmelze zugeführt, insbesondere im Bereich eines Speisekanals (feeder), der mit mechanischen Homogenisierern zum Vermischen des aus dem Haupt- und im Nebenstrang zusammen fließenden Glases versehen ist.

Um den Schaum- bzw. Blasenanteil in der Glasschmelze zu reduzieren, schlägt die Druckschrift US 2015/0197440 A1 vor, in einer dem Schmelzgefäß sich anschließenden Wanne mit einem Boden, einem Dach und einer Seitenwandstruktur, welche Boden und Dach verbindet, die mit dem Schaum und Blasen versetzte Glasschmelze zu beheizen, um die Temperatur der Glasschmelze zu halten oder zu erhöhen und zusätzlich die Zusammensetzung des Gases oberhalb der Glasschmelze in der Wanne zu steuern, z.B. seine Wassersättigung, und/oder die Oberfläche der Glasschmelze mit einer flüssigen oder festen Zusammensetzung zu berühren, beispielsweise mittels Wassertropfen.

In der Druckschrift US 2009/0235695 A1 wird demgegenüber zur Homogenisierung der Glasschmelze vorgeschlagen, in der Glasschmelzwanne oberhalb eines Tauchbrenners einen in der Überbauung angeordneten Brenner vorzusehen, dessen Flamme in dem Bereich der Glasschmelze auf deren Oberfläche auftrifft, in dem die von dem Tauchbrenner produzierten Blasen die Oberfläche der Glasschmelze erreichen.

Ebenfalls eine Glasschmelzanlage mit einem Läuterbereich für die Reduzierung des Blasenanteils wird in der Druckschrift US 8,402,787 B2 beschrieben, wobei eine verschiebbare Läuterwanne an ihrem Eingang einen Schacht aufweist, der derart gestaltet ist, dass die Übergabe des geschmolzenen Glases in den Refinerbereich mit minimalem Wärmeverlust erfolgt.

In der Druckschrift US 2015/0315057 A1 wird weiter vorgeschlagen, zur Beseitigung von Schaum und Blasen aus der Glasschmelze akustische Wellen oder Teilchenbestrahlung, beispielsweise mittels schwefelhaltiger Verbindungen, Glasbruch, vermahlenem Glas, Partikel mit einer Zusammensetzung, die in das geschmolzene Glas integrierbar ist, mittels gefrorenem CO₂, fester organischer Materialien oder Kombinationen oder Mischungen aus diesen zu verwenden. Weiter wird vorgeschlagen, den Schaum oder die Blasen mittels kontinuierlicher oder intermittierender Berührung mit siebartigem gewebtem oder nicht gewebtem Material zu entfernen. Die in der Druckschrift DD 287 244 beschriebene Läuterwanne weist Querwände sowie Elektroden auf. Zur Beheizung des Oberofens der Läuterwanne sind Brenner vorgesehen.

Die oben beschriebenen Lösungen sind jedoch aufwändig und kostenintensiv oder verändern die Zusammensetzung der Glasschmelze. Zudem wird häufig noch nicht die gewünschte Qualitätsverbesserung erreicht.

Die Aufgabe der vorliegenden Erfindung besteht somit darin, eine Vorrichtung zu schaffen, welche mit einfachen und kostengünstigen Mitteln eine effektive Verringerung der Blasigkeit der Glasschmelze bewirkt. Ferner besteht die Aufgabe darin, ein entsprechendes kostengünstiges Verfahren anzugeben.

Die obige Aufgabe wird gelöst durch einen Refiner mit den Merkmalen des Anspruchs 1. Insbesondere weist der Refiner eine Wanne zur Aufnahme der Glasschmelze auf, welche durch die Wanne in eine Transportrichtung zwischen einem vorderen Ende und einem am hinteren Ende angeordneten Auslass hindurchfließt, wobei die Wanne einen Boden, zwei sich vorzugsweise parallel zur Transportrichtung erstreckende Seitenwände und eine oberhalb der Seitenwände angeordnete, die Wanne nach oben abschließende Überbauung aufweist, wobei auf dem Boden der Wanne eine im Wesentlichen in Transportrichtung verlaufende Barriere in Form einer Bodenerhebung angeordnet ist, wobei die Barriere zumindest in einem vorderen Bereich in Transportrichtung auf jeder Seite direkt oberhalb des Bodens der Wanne eine kanalförmige Einschnürung (Verengung) der Wanne ausbildet, wobei die Breite jeder Einschnürung quer zur Transportrichtung höchstens das 0,45-fache der Breite der Wanne, besonders bevorzugt höchstens das 0,4-fache der Breite der Wanne, beträgt, wobei mindestens eine erste fossile Beheizungseinrichtung vorgesehen ist, welche in der Überbauung und/oder in der Seitenwand angeordnet ist und die Glasschmelze von oben beheizt, und wobei in jeder Seitenwand und/oder im Boden der Wanne im Bereich jeder Einschnürung mindestens eine zweite elektrische Beheizungseinrichtung angeordnet ist, welche in die Glasschmelze hineinragt und diese ebenfalls beheizt. Hierbei ist der Refiner als ein weiteres Gefäß gestaltet, das direkt mit dem Auslauf des Schmelzgefäßes verbunden ist, in dem mindestens ein Tauchbrenner die Ausgangsstoffe beheizt, um diese zum Schmelzen zu bringen.

Die Erfindung beruht auf der Erkenntnis, dass die Blasigkeit der Glasschmelze durch Erhöhung des Auftriebs der Blasen verringert werden kann. Die Blasen können allein durch ihren Auftrieb an die Oberfläche der Glasschmelze gebracht werden. In dem sogenannten Stoke'schen Gesetz wird der Zusammenhang von Zähigkeit der Glasschmelze, der Dichtedifferenz zwischen Glasschmelze und Gasblase und Gasblasenradius beschrieben. Da die Glasschmelze eine hohe Zähigkeit aufweist, ist die Auftriebsgeschwindigkeit der Gasblasen gering. Hieraus ergibt sich, dass zur thermischen Nachbehandlung einer blasenhaltigen Glasschmelze ein zweites Gefäß (Refiner) erforderlich ist, durch welches die Glasschmelze geführt wird. Die Größe des zweiten Gefäßes (Refiner) und damit die Verweilzeit der Glasschmelze in diesem Gefäß sowie die Temperaturführung bzw. Beheizung bestimmen das Maß, um das die Blasigkeit der Glasschmelze reduziert werden kann.

Eine umfangreiche Modellstudie hat außerdem gezeigt, dass eine fossile Beheizung allein nicht geeignet ist, eine ausreichende Anzahl der Blasen zum Aufsteigen zu bringen. Erst eine in der Strömung angeordnete Barriere, welche eine Aufteilung und Einschnürung der Strömung bewirkt, zusammen mit der zusätzlichen elektrischen Beheizung führt zu einer wesentlichen Verstärkung des Auftriebs und entsprechend zu einer signifikanten Reduktion der Blasigkeit. Erfindungsgemäß bewirkt die Kombination aus der Barriere, die sich in Transportrichtung erstreckt, mit der ersten fossilen Beheizungseinrichtung, die Wärme von oben zuführt und der zweiten elektrischen Beheizungseinrichtung, welche die Glasschmelze direkt beheizt, zu einer deutlichen Verringerung der Anzahl der Blasen in der Glasschmelze. Das Aufsteigen der Blase wird durch die allseitige Beheizung begünstigt, da hierdurch die Zähigkeit der Glasschmelze reduziert wird. Die die kanalförmigen Einschnürungen ausbildende Barriere bewirkt eine Teilung des Stroms der Glasschmelze. Die Hauptströmungspfade verlaufen hierbei längs der Barriere auf deren Seite innerhalb der kanalförmigen Einschnürungen mit erhöhter Strömungsgeschwindigkeit, welche das Aufsteigen der gasgefüllten Blasen ebenfalls begünstigt. Innerhalb der Einschnürung besitzt die Glasschmelze eine Höhe, die der Höhe der Glasschmelze vor der Barriere entspricht. Oberhalb der Barriere ist die Höhe der Glasschmelze entsprechend der Höhe der Barriere geringer.

In einem bevorzugten Ausführungsbeispiel beträgt die Länge l1 jeder Einschnürung das 0,2- bis 0,8-fache der Länge L1 der Wanne des Refiners und/oder die Breite b1 jeder Einschnürung mindestens das 0,1-fache der Breite W1 der Wanne des Refiners, besonders bevorzugt mindestens das 0,2-fache der Breite W1 der Wanne des Refiners, und/oder die Höhe h1 der Barriere das 0,2-fache bis 0,8-fache der Höhe H1 des Schmelzenspiegels in dem Refiner über dem Boden der Wanne. Eine Barriere mit derartigen Abmessungen beseitigt besonders effektiv die in der Glasschmelze vorhandenen Blasen und bewirkt einen ausreichend großen Durchsatz des Refiners.

An dieser Stelle soll ausdrücklich darauf hingewiesen werden, dass die Barriere zumindest im Bereich der kanalförmigen Einschnürungen sich nicht über die gesamte Breite der Wanne erstreckt. Beispielsweise wird die kanalförmige Einschnürung einerseits durch die Seitenwand der Barriere und andererseits durch die Seitenwand der Wanne seitlich begrenzt. Im Stand der Technik sind bisher lediglich Erhebungen beschrieben worden, welche die Glasschmelze über die gesamte Breite einer Wanne anheben, so dass die Glasschmelze über ihre gesamte Breite quer zur Transportrichtung einer geringen Tiefe besitzt. Die erfindungsgemäße Konstruktion der Barriere bewirkt demgegenüber eine Teilung und Beschleunigung des Glasstroms, um das Aufsteigen der Blasen zu begünstigen.

In einer Weiterbildung der Erfindung ist die mindestens eine erste fossile Beheizungseinrichtung derart in der Überbauung und/oder in der Seitenwand angeordnet, dass sie die Glasschmelze überwiegend in einem Bereich von oben beheizt, der in Transportrichtung vor, neben und/oder über der durch die Barriere ausgebildeten Einschnürung liegt. Durch eine derartige Beheizung wird insbesondere im maßgeblichen Bereich für die Reduktion der Blasigkeit eine Reduktion der Zähigkeit erreicht.

Es ist weiter von Vorteil, wenn im Bereich jeder Einschnürung mindestens zwei zweite Beheizungseinrichtungen in der Seitenwand und/oder im Boden der Wanne angeordnet sind, und vorzugsweise jeweils seitlich von der Barriere. Hierdurch wird eine noch bessere Beheizung des Refiners erreicht, so dass die Anzahl der Blasen weiter reduziert werden kann.

Es ist ferner von Vorteil, wenn die Form der Barriere im Querschnitt symmetrisch zu einer parallel zur Transportrichtung verlaufenden Mittelachse der Wanne gestaltet ist.

In einer Weiterbildung der Erfindung liegt eine Scheitelfläche oder eine Scheitellinie der Barriere unterhalb des Schmelzenspiegels der Glasschmelze, wobei vorzugsweise sich die Scheitellinie oder die Scheitelfläche parallel oder schräg zum Schmelzenspiegel erstreckt, wobei besonders bevorzugt die Scheitelfläche oder die Scheitellinie in Transportrichtung ansteigt. Hierbei begrenzt die Scheitelfläche oder Scheitellinie die Barriere oben, d.h. auf der dem Boden gegenüber liegenden Seite. Eine Scheitelfläche wird ausgebildet, wenn die Barriere oben flach geformt ist, vergleichbar mit einem Flachdach. Eine Scheitellinie ergibt sich, wenn die Barriere oben eine in Transportrichtung verlaufende Kante ausbildet, d.h. eine Form vergleichbar mit einem Sattel-/Giebeldach, einem Walmdach oder einem Mansarddach besitzt. Insbesondere bei der Ausgestaltung der Barriere mit einer Scheitellinie kann der Strom der Glasschmelze effektiv geteilt werden, so dass die Blasigkeit weiter reduziert werden kann. Das Aufsteigen der Blasen wird weiter dadurch begünstigt, dass die Scheitelfläche oder die Scheitellinie in Transportrichtung ansteigt.

Aus gleichem Grund ist es von Vorteil, wenn der Querschnitt der Barriere quer zur Transportrichtung zumindest abschnittsweise trapezförmig oder dreieckig gestaltet ist.

Die Barriere kann in einem in Transportrichtung vorderen Bereich oder rückwärtigen Bereich einen Abschnitt aufweisen, der in Richtung des Bodens der Wanne in einer Spitze ausläuft.

Es ist weiter von Vorteil, wenn die Breite der kanalförmigen Einschnürung sich in Transportrichtung
- verringert oder
- konstant bleibt oder
- in einem ersten verringert und in einem zweiten Bereich konstant bleibt, wobei der zweite Bereich vorzugsweise in Transportrichtung hinter dem ersten Bereich liegt.

Die obige Aufgabe wird zudem mit den oben bereits erläuterten Vorteilen durch eine Glasschmelzanlage gelöst, welche ein Schmelzgefäß und einen oben beschriebenen Refiner aufweist, wobei die Rohstoffe dem Schmelzgefäß mittels einer Zuführeinrichtung zugeführt und dort aufgeschmolzen werden, wobei ein der Zuführeinrichtung gegenüberliegender Auslass des Schmelzgefäßes mit einem vorzugsweise in der Überbauung am vorderen Ende des Refiners angeordneten Einlass des Refiners verbunden ist. Die Rohstoffe können auch Glasbruch beinhalten. Die erfindungsgemäße Glasschmelzanlage weist vorzugsweise zudem einen sich an den Refiner in Transportrichtung anschließenden Konditionierkanal und einen hinter dem Konditionierkanal angeordneten Speiserkanal auf.

Hinsichtlich der Baugröße und der Schmelzleistung ist es von Vorteil, wenn in dem Schmelzgefäß mindestens ein Tauchbrenner angeordnet ist, welcher das Material beheizt.

Mit den gleichen Vorteilen wird die obige Aufgabe auch durch ein Verfahren zur thermischen Nachbehandlung einer blasenhaltigen Glasschmelze gelöst, wobei die Glasschmelze in einer Wanne angeordnet wird, wobei die Glasschmelze durch die Wanne in eine Transportrichtung zwischen einem vorderen Ende und einem am hinteren Ende angeordneten Auslass hindurchfließt, wobei die Wanne einen Boden, zwei sich vorzugsweise parallel zur Transportrichtung erstreckende Seitenwände und eine oberhalb der Seitenwände angeordnete, die Wanne nach oben abschließende Überbauung aufweist, wobei die Glasschmelze über eine auf dem Boden der Wanne angeordnete, im Wesentlichen in Transportrichtung verlaufende Barriere in Form einer Bodenerhebung geführt wird, wobei die Barriere zumindest in einem vorderen Bereich in Transportrichtung auf jeder Seite direkt oberhalb des Bodens der Wanne mindestens eine kanalförmige Einschnürung der Wanne ausbildet, wobei die Breite jeder Einschnürung quer zur Transportrichtung höchstens das 0,45-fache der Breite der Wanne, vorzugsweise höchstens das 0,4-fache der Breite der Wanne, beträgt, wobei die Glasschmelze von oben mittels mindestens einer ersten fossilen Beheizungseinrichtung, welche in der Überbauung und/oder in der Seitenwand angeordnet ist, und direkt mittels mindestens einer zweiten elektrischen Beheizungseinrichtung, welche in jeder Seitenwand und/oder im Boden der Wanne im Bereich jeder Einschnürung angeordnet ist und in die Glasschmelze hineinragt, beheizt wird.

Die Erfindung wird nachfolgend anhand von Ausführungsbeispielen näher erläutert, welche in den Figuren dargestellt sind. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen schematisch:
- Fig. 1: ein Ausführungsbeispiel einer erfindungsgemäßen Glasschmelzanlage in Form eines Ablaufschemas,
- Fig. 2: das Schmelzgefäß und den Refiner der Glasschmelzanlage gemäß Fig. 1 in einem Längsschnitt,
- Fig. 3: Details des in FIg. 2 dargestellten Refiners in einem weiteren Längsschnitt,
- Fig. 4a u. b: den Refiner gemäß Fig. 3 in weiteren Querschnitten entlang der Linie AB (siehe Fig. 3) bzw. CD (Fig. 4a),
- Fig. 5 und 6: die Darstellungen gemäß Fig. 3 und 4a,b mit einer Markierung, welche die Bewegung der Blasen in der Schmelze visualisiert und
- Fig. 7 bis 8: weitere Beispiele für Barriereformen und ihre Anordnung auf dem Boden des Refiners jeweils in einer perspektivischen Ansicht von der Seite.

Das Rohstoffgemisch für die Glasherstellung, insbesondere für die Herstellung von Faserglas, wird kontinuierlich im Bereich des Einlasses 1 in das Schmelzgefäß 2 aufgegeben. Dies geschieht in der Regel oberhalb des Schmelzenspiegels 4 über ein kontinuierlich arbeitendes Zuführgerät. Alternativ kann das Rohstoffgemisch auch unterhalb des Schmelzenspiegels 4 zugeführt werden. Das Schmelzgefäß 2 ist meist mit einer Wasserkühlung ausgerüstet und doppelwandig ausgeführt. Das Schmelzgefäß 2 weist ferner in seinem Boden Tauchbrenner 5 auf, welche das zugeführte Rohstoffgemisch aufschmelzen. Die Tauchbrenner 5 werden mit einem fossilen Brennstoff 6 und einem Oxidanten versorgt. Die gasförmigen Reaktionsprodukte des Brennstoffs 6 mit dem Oxidanten (meist Sauerstoff) dieser Tauchbrenner 5 verbleiben zum Teil in der Glasschmelze 20 als Blasen. Zum Teil steigen sie aber bereits in dem Schmelzgefäß 2 auf und entweichen über einen Abgasabzug 3 des Schmelzgefäßes 2. Aus einer Auslassöffnung 7 nahe dem Boden des Schmelzgefäßes 2 wird die Glasschmelze 20 dem sogenannten Refiner 8 zugeführt.

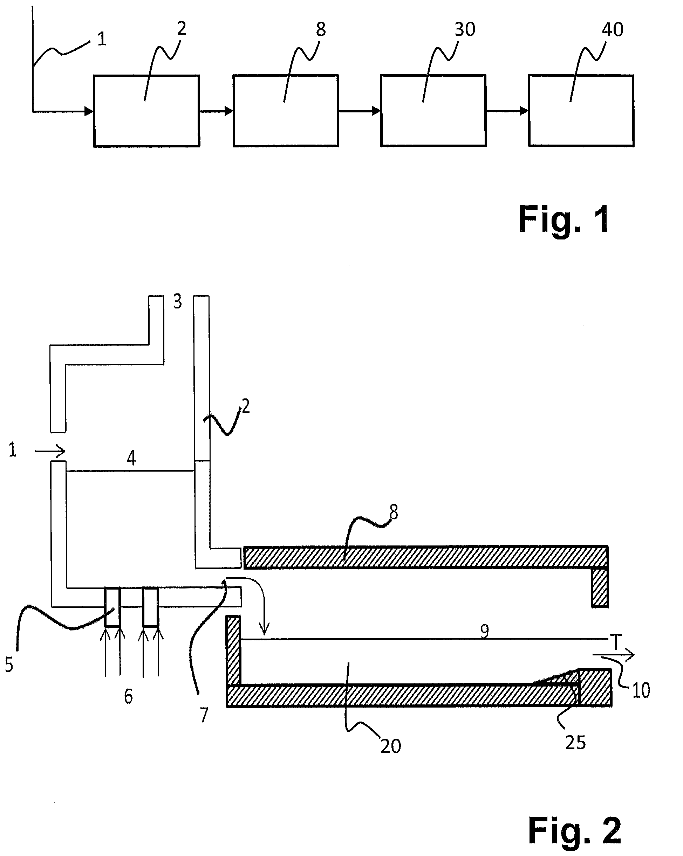

Die Zuführöffnung 13 des Refiners 8 liegt im Bereich der Transportrichtung T (siehe Pfeil in Fig. 2, 3 und 4a) der Glasschmelze 20 angeordneten vorderen Endes des Refiners 8. In dem Refiner 8 steigen die in der Glasschmelze enthaltenen Gasblasen an die Oberfläche auf. Dies wird auch als Läutern bezeichnet. In dem Refiner 8 stellt sich ein Schmelzenspiegel 9 ein, wobei die Glasschmelze den Refiner 8 an dessen hinterem Ende in Transportrichtung T durch den Auslass 10 verlässt.

Aus dem Refiner 8 gelangt die Glasschmelze nun über eine für eine strömungsgünstige Form sorgende, vor dem Auslass 10 angeordnete Rampe 25 in ein drittes Gefäß 30, in dem die Glasschmelze auf eine Temperatur abgekühlt wird, die zur Verarbeitung notwendig ist. Dieser Vorgang wird auch als thermisches Konditionieren bezeichnet. Von dem dritten Gefäß 30 wird die Glasschmelze dann in ein viertes Gefäß 40, welches mit einem Beheizungssystem ausgestattet ist, geleitet. In diesem vierten Gefäß 40 wird die Glasschmelze kontrolliert aus Öffnungen am Boden entlassen und zu Fasern verarbeitet. Das vierte Gefäß wird auch als Speiserkanal bezeichnet. Die Öffnungen, aus denen die Glasschmelze zur Herstellung der Fasern austritt, heißen Bushings.

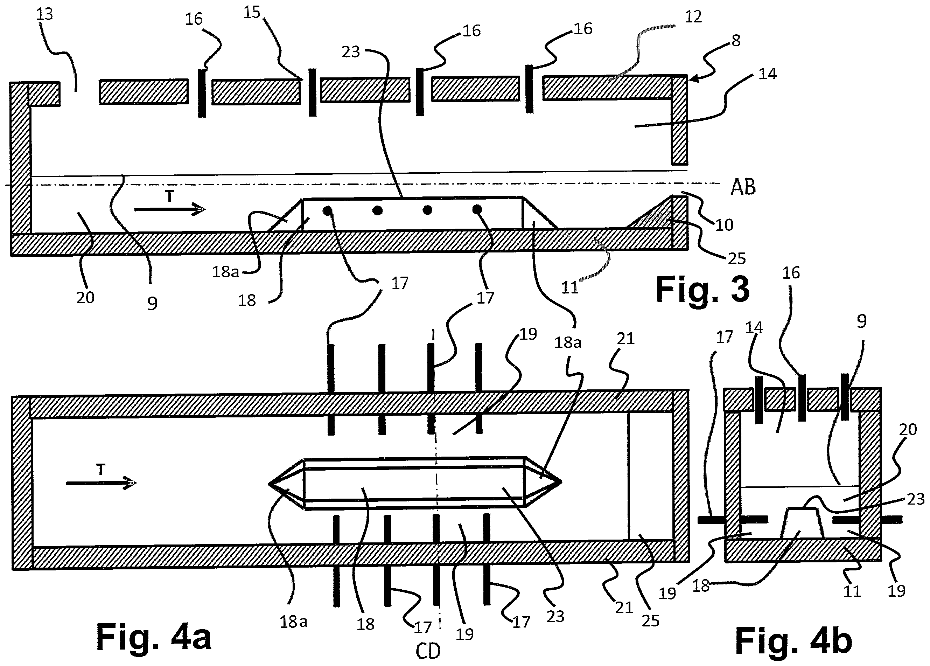

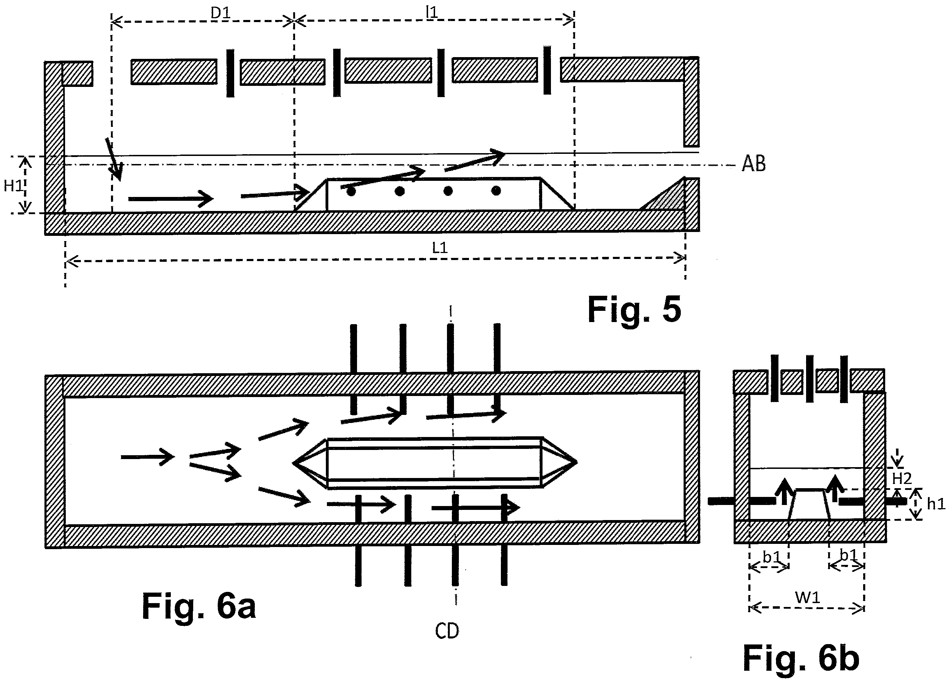

Der in den Fig. 3, 4a und 4b genauer dargestellte Refiner 8 besitzt eine Wanne zur Aufnahme der Glasschmelze 20 mit einem Boden 11, parallel zur Transportrichtung verlaufenden Seitenwänden 21 sowie einer Überbauung 12, welche die Wanne nach oben abschließt. Die Überbauung 12 ist oberhalb der Seitenwände 21 angeordnet. In der Überbauung 12 ist am vorderen Ende der Wanne eine Öffnung 13 angeordnet, durch die die Glasschmelze aus dem Schmelzgefäß 2 in den Refiner 8 gelangt. Die Wanne des Refiners besitzt eine Länge L1 und eine Breite W1. Der Schmelzenspiegel 9 hat eine Höhe H1 über dem Boden 11 (vgl. Fig. 5 bis 6b).

Flussabwärts von der Öffnung 13 sind in der Überbauung 12 eine Mehrzahl von Öffnungen 15 vorgesehen, durch die senkrecht oder unter einem Winkel jeweils eine Brennerlanze 16 als fossile Beheizungseinrichtung in den Raum 14 über der Glasschmelze 20 hineinragt. Jeder Brennerlanze 16 wird fossiler Brennstoff und ein Oxidant (meist Sauerstoff) zugeführt. Die fossilen Brenner 16 beheizen die Glasschmelze 20 von oben in einem Bereich vor (in Transportrichtung T) und über einer Barriere 18 auf dem Boden 11 der Wanne.

Unterhalb des Schmelzenspiegels 9 ragen durch jede Seitenwand 21 hindurch vier Elektroden 17 in die Glasschmelze 20 hinein. Die Elektroden sind seitlich von der Barriere 18 angebracht und beheizen die Glasschmelze direkt.

Die Barriere 18 ist eine in der Mitte der Wanne angeordnete Erhebung, welche in Transportrichtung etwa in einen Abstand D1 von der Öffnung 13 aufweist. Ihre längste Ausdehnung (Länge l1) besitzt die Barriere 18 in Transportrichtung T. Die Barriere 18 hat von jeder Seitenwand 21 einen Abstand b1. Zusammen mit jeder Seitenwand 21 bildet die Barriere 18 jeweils eine kanalförmige Einschnürung 19 der Breite b1, welche den Strom der Glasschmelze 20 zwingt, sich in Teilströme zu teilen, die sich entlang der Einschnürung 19 bewegen. Innerhalb der Einschnürung 19 besitzt die Glasschmelze 20 eine Höhe H1, die der Höhe H1 der Glasschmelze 20 vor der Barriere 18 entspricht. Oberhalb der Barriere 18 ist die Höhe H2 der Glasschmelze entsprechend der Höhe h1 der Barriere 18 geringer.

Im Querschnitt besitzt die Barriere 18 über den größten Teil ihrer Länge eine Trapezform (siehe Fig. 4b), wobei die obere Seite des Trapezes über die Länge der Barriere 18 eine Scheitelfläche 23 ausbildet. Die Scheitelfläche 23 verläuft parallel zum Schmelzenspiegel 9. Weiter sind die Elektroden 17 so angeordnet, dass deren Mittelachse parallel zur Scheitelfläche 23 verläuft und einen Abstand vom Boden 11 des Refiners 8 aufweist, welche der Höhe h1 der Barriere 18 entspricht. Lediglich in Transportrichtung T am Anfang und am Ende der Barriere 18 besitzt die Barriere einen rampenartigen, in Richtung des Bodens 11 spitz auslaufenden Abschnitt 18a, welcher der Barriere 18 eine strömungsgünstigere Form gibt.

Fig. 5 bis 6b zeigen anhand der in der Glasschmelze 20 angeordneten Pfeile den Weg der Blasen in der Glasschmelze. Unterhalb der Öffnung 13 bewegen sich die Blasen in Richtung des Bodens 11. Vor der Barriere 18 wird der Strom der Glasschmelze 20 durch die mittig angeordnete Barriere 18 in zwei Teilströme aufgeteilt, welche sich jeweils entlang der kanalförmigen Einschnürungen 19 bewegen und in diesen an die Oberfläche der Glasschmelze 20 aufsteigen.

Modellbeispiel mit einer Barriere analog zu der in den Fig. 3 bis 6b dargestellten Barriere 18:
In einem Modell wurde berechnet, dass bei Herstellung von Faserglas (C-Glas) in einer Glasschmelzanlage mit einer Durchsatzleistung von 250 Tonnen/Tag die Blasenmenge in der Glasschmelze 20, welche aus dem Schmelzgefäß 2 in den Refiner 8 überführt wird, einem Volumenprozent-Anteil von 25 % besitzt. Der Refiner 8 hat eine Länge L1 von 8900 mm, eine Breite W1 von 2000 mm und eine Höhe des Schmelzenspiegels 9 über dem Boden 11 von 575 mm. In einem Abstand D1 von 3750 mm vom Übergabepunkt der Glasschmelze aus dem Schmelzgefäß 2 beginnt die Barriere 18, welche auf dem Boden 11 des Refiners 8 angeordnet ist. Die Barriere 18 hat eine Länge l1 von 2600 mm und eine Höhe h1 von 200 mm. Die Breite der Barriere 18 beträgt 650 mm. Folglich beträgt der Abstand b1 der Barriere von jeder Seitenwand 21, d.h. die Breite der Einschnürung 19, etwa 675 mm.

Links und rechts von der Barriere 18 ragen jeweils vier in der Seitenwand 21 angeordnete Elektroden 17 in die Glasschmelze 20 hinein. Die Scheitelfläche 23 der Barriere 18 liegt auf der gleichen Höhe wie die Mittelachsen der Elektroden 17, d.h. die Elektroden ragen auf einer Höhe von 200 mm über dem Boden 11 in die Glasschmelze 20. In der Überbauung 12 des Refiners 8 sind in vier Reihen jeweils drei Brennerlanzen 16 angeordnet, welche in einem Winkel von 20° gegen die Transportrichtung T der Glasschmelze 20 stehen.

Die über die Elektroden 17 eingebrachte elektrische Leistung beträgt insgesamt 200 kW. Die Heizleistung der Brennerlanzen 16 beträgt insgesamt etwa 300 kW. Bei Ihrem Eintritt in den Refiner 8 hat die Glasschmelze 20 eine Temperatur von etwa 1230°C. In dem Refiner 8 wird die Glasschmelze auf eine Temperatur von etwa 1280°C aufgeheizt. Nach der Modellrechnung wird die Anzahl der Blasen entlang des Refiners 8 durch die Kombination der oben beschriebenen Maßnahmen auf die Hälfte reduziert.

Der unten stehenden Tabelle können außer dem oben erläuterten Modellbeispiel (dort als Fallstudie bezeichnet) weitere Beispiele für Glasschmelzanlagen entnommen werden, wobei die Barriere (Erhebung) 18 jeweils die in den Fig. 3 bis 6b gezeigte Form aufweist. Es werden drei verschiedene "Bereiche" unterschieden, nämlich
- einen Bereich I mit einem täglichen Durchsatz zwischen 80 t und 300 t,
- einen Bereich II mit einem täglichen Durchsatz zwischen 200 t und 250 t und
- einen Bereich III mit einem täglichen Durchsatz zwischen 150 t und 200 t.
Für das Modellbeispiel und die Bereiche I bis III sind in der Tabelle die Innenabmessungen des Refiners und die Maße der Barriere (Erhebung) 18 angegeben.

| | | | **Fallstudie** | **Bereich** | **Bereich II** | **Bereich III** |
|---|---|---|---|---|---|---|
| **Refiner-Abmessung** | | Einheit | | | | |
| Durchsatz | | t/d | 250 | 80-300 | 200-250 | 150-200 |
| Länge | L1 | m | 8,9 | 4-15 | 5-12 | 4-10 |
| Breite | W1 | m | 2 | 1-3 | 1-3 | 1-3 |
| Tiefe | H1 | m | 0,575 | 0,3-0,8 | 0,3-0,8 | 0,3-0,8 |
| | | | | | | |

| **Barriere** | | | | | | |
|---|---|---|---|---|---|---|
| Länge | l1 | m | 2,6 | 0,2-0,8 x L1 | 0,3-0,6 x L1 | 0,3-0,6 x L1 |
| Breite | w1 | m | 1 | 0,2-0,8 x W1 | 0,3-0,6 x W1 | 0,3-0,6 x W1 |
| Tiefe | h1 | m | 0,35 | 0,2-0,8 x H1 | 0,3-0,6 x H1 | 0,3-0,6 x H1 |
| Breite Einschnürung | b1 | m | 0,5 | 0,1-0,45 x W1 | 0,15-0,4 x W1 | 0,2-0,4 x W1 |
| | | | | | | |
| spez. Belastung | | t/m²d | 14,0 | 8-20 | 10-16 | 10-16 |

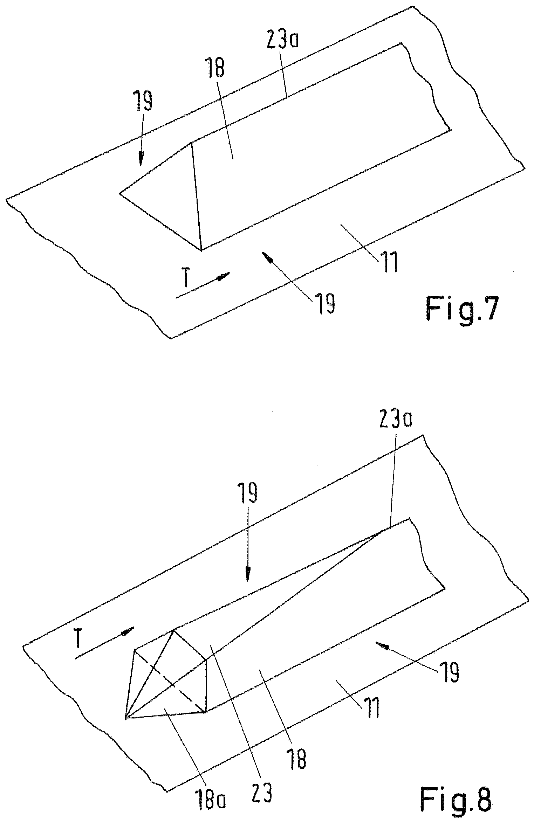

In den Fig. 7 bis 8 sind weitere Varianten für Formen der Barriere 18 dargestellt. Die in Fig. 7 gezeigte Barriere 18 besitzt eine dreieckige Querschnittsform und bildet auf der Oberseite eine Scheitellinie 23a auf, welche parallel zum nicht dargestellten Schmelzenspiegel 9 verläuft. Zudem besitzt die in Fig. 7 dargestellte Barriere verglichen mit der in Fig. 3 bis 6b dargestellten Barriere keinen spitz zulaufenden Anfangs- und Endabschnitt 18a.

Demgegenüber ist ein solcher Anfangs- und ggf. auch Endabschnitt 18a bei den in den Fig. 8 gezeigten Barriere vorgesehen.

Die in Fig. 8 dargestellte Barriere 18 besitzt am Anfang einen trapezförmigen Querschnitt. In Transportrichtung T verjüngt sich die Scheitelfläche 23 derart, dass sie schließlich lediglich eine Scheitellinie 23a ausbildet und die Querschnittsform der Barriere 18 in diesem Bereich ein Dreieck bildet. Die Scheitelfläche 23 steigt zudem in Transportrichtung T an, so dass die Höhe h1 der Barriere in Transportrichtung T zunimmt.

Alle derartigen Barrieren 18 bewirken eine deutliche Reduktion der Blasigkeit der Glasschmelze und somit eine Verbesserung der Glasqualität.

### Bezugszeichenliste:

- 1: Einlass
- 2: Schmelzgefäß
- 3: Abgasabzug
- 5: Tauchbrenner
- 6: Verbrennungsgas
- 7: Auslassöffnung
- 8: Refiner
- 9: Schmelzenspiegel
- 10: Auslass
- 11: Boden
- 12: Überbauung
- 13: Öffnung
- 14: Raum über der Glasschmelze 20
- 15: Öffnung
- 16: Brennerlanze
- 17: Elektrode
- 18: Barriere
- 18a: Abschnitt
- 19: kanalförmige Einschnürung
- 20: Glasschmelze
- 21: Seitenwand
- 23: Scheitelfläche
- 23a: Scheitellinie
- 25: Rampe
- 30: drittes Gefäß
- 40: viertes Gefäß
- T: Transportrichtung

## Patentansprüche

1. Refiner (8) für eine Glasschmelzanlage zur thermischen Nachbehandlung einer blasenhaltigen Glasschmelze (20), insbesondere für die Herstellung von Faserglas, mit einer Wanne zur Aufnahme der Glasschmelze (20), welche durch die Wanne in eine Transportrichtung (T) zwischen einem vorderen Ende und einem am hinteren Ende angeordneten Auslass (10) hindurchfließt, wobei die Wanne einen Boden (11), zwei sich vorzugsweise parallel zur Transportrichtung erstreckende Seitenwände (21) und eine oberhalb der Seitenwände (21) angeordnete, die Wanne nach oben abschließende Überbauung (12) aufweist, wobei auf dem Boden (11) der Wanne eine im Wesentlichen in Transportrichtung (T) verlaufende Barriere (18) in Form einer Bodenerhebung angeordnet ist, wobei die Barriere (18) zumindest in einem vorderen Bereich in Transportrichtung (T) auf jeder Seite eine kanalförmige Einschnürung (19) der Wanne ausbildet, wobei die Breite (b1) jeder Einschnürung (19) quer zur Transportrichtung (T) höchstens das 0,45-fache der Breite (W1) der Wanne, vorzugsweise höchstens das 0,4-fache der Breite der Wanne, beträgt, wobei mindestens eine erste fossile Beheizungseinrichtung (16) vorgesehen ist, welche in der Überbauung (12) und/oder in der Seitenwand angeordnet ist und die Glasschmelze (20) von oben beheizt, und wobei in jeder Seitenwand (21) und/oder im Boden der Wanne im Bereich jeder Einschnürung (19) mindestens eine zweite elektrische Beheizungseinrichtung (17) angeordnet ist, welche in die Glasschmelze (20) hineinragt und diese beheizt.

2. Refiner nach Anspruch 1, **dadurch gekennzeichnet, dass** die Länge (l1) jeder Einschnürung (19) das 0,2- bis 0,8-fache der Länge (L1) der Wanne des Refiners (8) und/oder die Breite (b1) jeder Einschnürung (19) mindestens das 0,1-fache der Breite (W1) der Wanne des Refiners (8), besonders bevorzugt mindestens das 0,2-fache der Breite (W1) der Wanne des Refiners (8), und/oder die Höhe (h1) der Barriere das 0,2-fache bis 0,8-fache der Höhe (H1) des Schmelzenspiegels (9) in dem Refiner (8) über dem Boden der Wanne beträgt.

3. Refiner nach einem der vorhergehenden Ansprüche, **dadurch gekennzeichnet, dass** die mindestens eine erste Beheizungseinrichtung (16) derart in der Überbauung (12) und/oder in der Seitenwand angeordnet ist, dass sie die Glasschmelze (20) überwiegend in einem Bereich von oben beheizt, der in Transportrichtung (T) vor, neben und/oder über der durch die Barriere ausgebildeten Einschnürung (19) liegt.

4. Refiner nach einem der vorhergehenden Ansprüche, **dadurch gekennzeichnet, dass** im Bereich jeder Einschnürung (19) mindestens zwei zweite Beheizungseinrichtungen (17) in der Seitenwand (21) und/oder im Boden der Wanne angeordnet sind.

5. Refiner nach einem der vorhergehenden Ansprüche, **dadurch gekennzeichnet, dass** die Form der Barriere (18) im Querschnitt symmetrisch zu einer parallel zur Transportrichtung (T) verlaufenden Mittelachse der Wanne ist.

6. Refiner nach einem der vorhergehenden Ansprüche, **dadurch gekennzeichnet, dass** eine Scheitelfläche (23) oder eine Scheitellinie (23a) der Barriere unterhalb des Schmelzenspiegels (9) der Glasschmelze (20) liegt, wobei vorzugsweise die Scheitellinie (23a) oder die Scheitelfläche (23) sich parallel oder schräg zum Schmelzenspiegel (9) erstreckt, wobei besonders bevorzugt die Scheitelfläche (23) oder die Scheitellinie (23a) in Transportrichtung (T) ansteigt.

7. Refiner nach einem der vorhergehenden Ansprüche, **dadurch gekennzeichnet, dass** der Querschnitt der Barriere (18) quer zur Transportrichtung (T) zumindest abschnittsweise trapezförmig oder dreieckig ist.

8. Refiner nach einem der vorhergehenden Ansprüche, **dadurch gekennzeichnet, dass** die Breite (b1) der kanalförmigen Einschnürung (19) sich in Transportrichtung (T)
• verringert oder
• konstant bleibt oder
• in einem ersten Bereich verringert und in einem zweiten Bereich konstant bleibt.

9. Glasschmelzanlage, insbesondere für die Herstellung von Faserglas, mit einem Schmelzgefäß (2) und einem Refiner (8) nach einem der vorhergehenden Ansprüche, wobei Rohstoffe dem Schmelzgefäß mittels einer Zuführeinrichtung zugeführt und dort aufgeschmolzen werden, wobei ein der Zuführeinrichtung gegenüber liegender Auslass (7) des Schmelzgefäßes (2) mit einem vorzugsweise in der Überbauung (12) am vorderen Ende des Refiners (8) angeordneten Einlass (13) des Refiners (8) verbunden ist.

10. Glasschmelzanlage nach Anspruch 9, **dadurch gekennzeichnet, dass** in dem Schmelzgefäß (2) mindestens ein Tauchbrenner (5) angeordnet ist, welcher das Material beheizt.

11. Verfahren zur thermischen Nachbehandlung einer blasenhaltigen Glasschmelze (20), insbesondere für die Herstellung von Faserglas, in einer Wanne, wobei die Glasschmelze (20) durch die Wanne in eine Transportrichtung (T) zwischen einem vorderen Ende und einem am hinteren Ende angeordneten Auslass (10) hindurchfließt, wobei die Wanne einen Boden (11), zwei sich vorzugsweise parallel zur Transportrichtung (T) erstreckende Seitenwände (21) und eine oberhalb der Seitenwände (21) angeordnete, die Wanne nach oben abschließende Überbauung (12) aufweist,
wobei die Glasschmelze (20) über eine auf dem Boden (11) der Wanne angeordnete, im Wesentlichen in Transportrichtung (T) verlaufende Barriere (18) in Form einer Bodenerhebung geführt wird, wobei die Barriere (18) zumindest in einem vorderen Bereich in Transportrichtung (T) auf jeder Seite eine kanalförmige Einschnürung (19) der Wanne ausbildet, wobei die Breite (b1) jeder Einschnürung (19) quer zur Transportrichtung (T) höchstens das 0,45-fache der Breite (W1) der Wanne, vorzugsweise höchstens das 0,4-fache der Breite der Wanne, beträgt, wobei die Glasschmelze (20) von oben mittels mindestens einer ersten fossilen Beheizungseinrichtung (16), welche in der Überbauung (12) und/oder in der Seitenwand (21) angeordnet ist, und direkt mittels mindestens einer zweiten elektrischen Beheizungseinrichtung (17), welche in jeder Seitenwand (21) und/oder im Boden der Wanne im Bereich jeder Einschnürung (19) angeordnet ist und in die Glasschmelze (20) hineinragt, beheizt wird.

## Claims

1. A refiner (8) for a glass melting apparatus for the thermal post-treatment of a glass melt (20) which contains bubbles, in particular for the production of fibreglass, having a tank for accommodating the glass melt (20) which flows through the tank in a transport direction (T) between a front end and an outlet (10) disposed at the back end, wherein the tank comprises a floor (11), two side walls (21) which preferably extend parallel to the transport direction, and a superstructure (12) which is disposed above the side walls (21) and closes the tank from above, wherein a barrier (18) in the form of a raised part of the floor running essentially in the transport direction (T) is disposed on the floor (11) of the tank, wherein at least in a front region in the transport direction (T), the barrier (18) forms a channel-shaped constriction (19) on either side in the tank, wherein the width (b1) of each constriction (19) transversely to the transport direction (T) is at most 0.45 times the width (W1) of the tank, preferably at most 0.4 times the width of the tank, wherein at least one first fossil fuel heating device (16) is provided, which is disposed in the superstructure (12) and/or in the side wall and heats the glass melt (20) from above, and wherein at least one second electrical heating device (17) is disposed in each side wall (21) and/or in the floor of the tank in the region of each constriction (19) and protrudes into the glass melt (20) to heat it.

2. The refiner as claimed in claim 1, **characterized in that** the length (L1) of each constriction (19) is 0.2 to 0.8 times the length (L1) of the tank of the refiner (8) and/or the width (b1) of each constriction (19) is at least 0.1 times the width (W1) of the tank of the refiner (8), particularly preferably at least 0.2 times the width (W1) of the refiner (8), and/or the height (h1) of the barrier is 0.2 times to 0.8 times the height (H1) of the level of the melt surface (9) over the floor of the tank in the refiner (8).

3. The refiner as claimed in one of the preceding claims, **characterized in that** the at least one first heating device (16) is disposed in the superstructure (12) and/or in the side wall in a manner such that it primarily heats the glass melt (20) from above in a region which, in the transport direction (T), is situated in front of, next to and/or above the constriction (19) formed by the barrier.

4. The refiner as claimed in one of the preceding claims, **characterized in that** at least two second heating devices (17) are disposed in the side wall (21) and/or in the floor of the tank in the region of each constriction (19).

5. The refiner as claimed in one of the preceding claims, **characterized in that** the shape of the barrier (18) is symmetrical in cross section to a central axis of the tank running parallel to the transport direction (T).

6. The refiner as claimed in one of the preceding claims, **characterized in that** an apex face (23) or an apex line (23a) of the barrier is situated underneath the level of the melt surface (9) of the glass melt (20), wherein preferably, the apex line (23a) or the apex face (23) extends parallel to or obliquely to the level of the melt surface (9), wherein particularly preferably, the apex face (23) or the apex line (23a) is inclined upwardly in the transport direction (T).

7. The refiner as claimed in one of the preceding claims, **characterized in that** the cross section of the barrier (18) perpendicular to the transport direction (T) is trapezoidal or triangular at least in some sections.

8. The refiner as claimed in one of the preceding claims, **characterized in that** the width (b1) of the channel-shaped constriction (19) in the transport direction (T) :
• reduces, or
• remains constant, or
• reduces in a first region and remains constant in a second region.

9. A glass melting apparatus, in particular for the production of fibreglass, with a melt crucible (2) and a refiner (8) as claimed in one of the preceding claims, wherein raw materials are supplied to the melt crucible by means of a feed device and are melted therein, wherein an outlet (7) of the melt crucible (2) situated opposite to the feed device is connected to an inlet (13) of the refiner (8) which is preferably disposed in the superstructure (12) at the front end of the refiner (8).

10. The glass melting apparatus as claimed in claim 9, **characterized in that** at least one submerged burner (5) is disposed in the melt crucible (2) in order to heat the material.

11. A process for the thermal post-treatment of a glass melt (20) containing bubbles, in particular for the production of fibreglass, in a tank, wherein the glass melt (20) flows through the tank in a transport direction (T) between a front end and an outlet (10) disposed at the back end, wherein the tank comprises a floor (11), two side walls (21) which preferably extend parallel to the transport direction (T) and a superstructure (12) which is disposed above the side walls (21) and closes the tank from above,
wherein the glass melt (20) is guided over a barrier (18) in the form of a raised part of the floor disposed on the floor (11) of the tank and running essentially in the transport direction (T), wherein the barrier (18) forms a channel-shaped constriction (19) on either side in the tank at least in a front region in the transport direction (T), wherein the width (b1) of each constriction (19) perpendicular to the transport direction (T) is at most 0.45 times the width (W1) of the tank, preferably at most 0.4 times the width of the tank, wherein the glass melt (20) is heated from above by means of at least one first fossil fuel heating device (16) which is disposed in the superstructure (12) and/or in the side wall (21), and directly by means of at least one second electrical heating device (17) which is disposed in each side wall (21) and/or in the floor of the tank in the region of each constriction (19) and which protrudes into the glass melt (20).

## Revendications

1. Affineuse (8) destinée à une installation de fusion du verre, pour le post-traitement thermique d'un verre fondu (20) contenant des bulles, notamment pour la fabrication de verre pour fibre, avec une cuve destinée à recevoir le verre fondu (20), qui à travers la cuve s'écoule dans une direction de transport (T) entre une extrémité avant et une sortie (10) placée sur l'extrémité arrière, la cuve comportant un fond inférieur (11), deux parois latérales (21) s'étendant de préférence à la parallèle de la direction de transport et une superstructure (12) placée au-dessus des parois latérales (21), fermant la cuve sur le dessus, sur le fond inférieur (11) de la cuve étant placée une barrière (18) s'écoulant sensiblement dans la direction de transport (T) sous la forme d'une élévation du fond inférieur, la barrière (18) formant au moins dans la région avant, dans la direction de transport (T) sur chaque côté un étranglement (19) en forme de canal de la cuve, la largeur (b1) de chaque étranglement (19) à la transversale de la direction de transport (T) s'élevant à au maximum 0,45 fois la largeur (W1) de la cuve, de préférence à au maximum 0,4 fois la largeur de la cuve, au moins un premier système de chauffage fossile (16) étant prévu, lequel est placé dans la superstructure (12) et/ou dans la paroi latérale et qui chauffe le verre fondu (20) par le haut, et dans chaque paroi latérale (21) et/ou dans le fond inférieur de la cuve, dans la région de chaque étranglement (19) étant placé au moins un deuxième système de chauffage électrique (17), lequel saillit dans le verre fondu (20) et chauffe celui-ci.

2. Affineuse selon la revendication 1, **caractérisée en ce que** la longueur (L1) de chaque étranglement (19) s'élève à de 0,2 à 0,8 fois la longueur (L1) de la cuve de l'affineuse (8) et/ou la largeur (b1) de chaque étranglement (19) s'élève à au moins 0,1 fois la largeur (W1) de la cuve de l'affineuse (8), de manière particulièrement préférentielle à 0,2 fois la largeur (W1) de la cuve de l'affineuse (8), et/ou la hauteur (h1) de la barrière s'élève à de 0,2 fois à 0,8 fois la hauteur (H1) du niveau de la masse fondue (9) dans l'affineuse (8) au-dessus du fond inférieur de la cuve.

3. Affineuse selon l'une quelconque des revendications précédentes, **caractérisée en ce que** l'au moins un premier système de chauffage (16) est placé dans la superstructure (12) et/ou dans la paroi latérale de telle sorte qu'il chauffe le verre fondu (20) majoritairement dans une région à partir du haut, qui dans la direction de transport (T) se situe à l'avant, à côté et/ou au-dessus de l'étranglement (19) créé par la barrière.

4. Affineuse selon l'une quelconque des revendications précédentes, **caractérisée en ce que** dans la région de chaque étranglement (19), au moins deux deuxièmes systèmes de chauffage (17) sont placés dans la paroi latérale (21) et/ou dans le fond inférieur de la cuve.

5. Affineuse selon l'une quelconque des revendications précédentes, **caractérisée en ce que** la forme de la barrière (18) dans la section transversale est symétrique à un axe médian de la cuve s'écoulant à la parallèle de la direction de transport (T).

6. Affineuse selon l'une quelconque des revendications précédentes, **caractérisée en ce qu'**une surface de crête (23) ou une ligne de crête (23a) de la barrière se situe en dessous du niveau de la masse fondue (9) du verre fondu (20), de préférence, la ligne de crête (23a) ou la surface de crête (23) s'étendant à la parallèle ou en oblique par rapport au niveau de la masse fondue (9), de manière particulièrement préférentielle, la surface de crête (23) ou la ligne de crête (23a) croissant dans la direction de transport (T).

7. Affineuse selon l'une quelconque des revendications précédentes, **caractérisée en ce que** la section transversale de la barrière (18) à la transversale de la direction de transport (T) est de forme trapézoïdale ou triangulaire au moins par segments.

8. Affineuse selon l'une quelconque des revendications précédentes, **caractérisée en ce que**, dans la direction de transport (T), la largeur (b1) de l'étranglement (19) en forme de canal
• se réduit
• ou reste constante
• ou se réduit dans une première région et reste constante dans une deuxième région.

9. Installation de fusion du verre, notamment destinée à la fabrication de verre pour fibre, avec un creuset (2) et une affineuse (8) selon l'une quelconque des revendications précédentes, des matières premières étant alimentées vers le creuset au moyen d'un système d'alimentation et y étant mises en fusion, une sortie (7) du creuset (2) située au regard du système d'alimentation étant reliée de préférence avec une entrée (13) de l'affineuse (8) placée de préférence dans la superstructure (12), sur l'extrémité avant de l'affineuse (8).

10. Installation de fusion du verre selon la revendication 9, **caractérisée en ce que** dans le creuset (2) est placé au moins un brûleur immergé (5) qui chauffe la matière.

11. Procédé, destiné au post-traitement thermique d'un verre fondu (20) contenant des bulles, notamment à la fabrication de verre pour fibre dans une cuve, le verre fondu (20) s'écoulant à travers la cuve dans une direction de transport (T) entre une extrémité avant et une sortie (10) placée sur l'extrémité arrière, la cuve comportant un fond inférieur (11), deux parois latérales (21) s'étendant de préférence à la parallèle de la direction de transport (T) et une superstructure (12) placée au-dessus des parois latérales (21) fermant la cuve sur le dessus,
le verre fondu (20) étant conduit par l'intermédiaire d'une barrière (18) placée sur le fond inférieur (11) de la cuve, sensiblement dans la direction de transport (T) sous la forme d'une élévation du fond inférieur, au moins dans une région avant dans la direction de transport (T), la barrière (18) formant de chaque côté un étranglement (19) en forme de canal de la cuve, la largeur (b1) de chaque étranglement (19) à la transversale de la direction de transport (T) s'élevant au maximum à 0,45 fois la largeur (W1) de la cuve, de préférence au maximum à 0,4 fois la largeur de la cuve, le verre fondu (20) étant chauffé par le haut au moyen d'au moins un premier système de chauffage fossile (16), lequel est placé dans la superstructure (12) et/ou dans la paroi latérale (21), et directement au moyen d'au moins un deuxième système de chauffage électrique (17), lequel est placé dans chaque paroi latérale (21) et/ou dans le fond inférieur de la cuve, dans la région de chaque étranglement (19) et saillit dans le verre fondu (20).
